# EUROPEAN PATENT APPLICATION

(11) **EP 4 074 414 A1**
(43) Date of publication of application: **19.10.2022**
(21) Application number: 21168655.5
(22) Date of filing: 15.04.2021
(51) Int. Cl.: B01J 20/02, B01J 20/04, B01D 53/04, C01C 3/12

(54) **CRYSTALLINE SORBENT MATERIALS FOR WATER CAPTURE AND RELEASE**

(71) Applicant: Molecule RND Limited, Castleroy, Limerick (IE)
(72) Inventor: ZAWOROTKO, Michael J., Limerick, V94 T9PX (IE); SANDA, Suresh, Limerick, V94 T9PX (IE); GASCÓN PÉREZ, Victoria, Limerick, V94 T9PX (IE)
(74) Representative: Appleyard Lees IP LLP

(57) **Abstract**

The present invention relates to a crystalline sorbent material of formula A_{b}M'[M(CN)₆]_{y} · nH₂O, wherein A is a group 1 metal; b is from 0.001 to 0.3; M' is a transition metal; M is iron or cobalt; y is from 0.65 to 0.80; and n is from 0 to 7. The crystalline sorbent materials of the present invention may be used in a method of capturing water. The method of the present invention utilising such crystalline sorbent materials may be used in water capture and purification processes to provide fresh water suitable for drinking or for use in agriculture. The method of the present invention may also be used to remove water as a contaminant or for use in dehumidification processes. A use of such a crystalline sorbent material is also disclosed.

## Description

### Field

The present invention relates to a crystalline sorbent material for adsorbing and desorbing water. The present invention also relates to a method of capturing water from a composition comprising water or water vapour and to a use of a crystalline sorbent material for capturing water. In particular, the present invention relates to capturing water using said crystalline sorbent material having a favourable water sorption isotherm and optimal kinetics and thermodynamics of water uptake and release.

### Background

Water is one of the Earth's most fundamental resources, with plants, animals and humans all needing freshwater for survival. Water is also used heavily in agriculture and industrial processes. Water demand globally is projected to increase by 55% between 2000 and 2050. Much of this demand is driven by growing populations in regions where water is scarce.

There is therefore a continuing and growing need to provide water in purified form, for example from gas and liquid sources comprising water vapour or water, respectively, and other components or impurities. A significant majority of the water on Earth is salt water, such as seawater or brackish water (which is a combination of seawater and freshwater). Fresh/pure water may be produced from seawater or to a lesser degree, brackish water. In these processes, the concentration of dissolved salts and other contaminants is reduced to provide the fresh/purified water. However, many of these existing purification and desalination processes require significant amounts of energy.

Atmospheric water vapour is an underexploited natural water resource which has the potential to provide purified water from air and it is potentially sustainable. In addition, the control of humidity in heating, ventilation and air conditioning (HVAC) systems involves removing water from air to create a less humid environment. Current HVAC systems use substantial amounts of energy and therefore even a small reduction in energy consumption can be highly beneficial.

Research into water capture materials has focused on sorbent materials such as zeolites and silica, which are known as desiccants when they are used for water capture. These desiccant materials contain many binding sites for the adsorption of small molecules such as water and they are also used in related applications, for example carbon dioxide capture and gas separation. However, water capture and delivery using these materials is too energy intensive to be economically viable as the desorption process to recover the water requires significant heating.

More recently, attention has turned towards metal-organic frameworks (MOFs) and covalent-organic frameworks (COFs). However, like zeolites and silica, many of these materials are not commercially viable. For example, those materials that possess a rigid three-dimensional framework, which is often highly strained, can suffer poor recyclability, with structures collapsing when subjected to reversibility tests due to low thermal and/or hydrolytic stabilities. Additionally, many such materials have a low working capacity, caused by a low density of binding sites that results in poor water uptake and/or unsuitable adsorption profiles. Further, some of these materials have strong water binding sites meaning high energy requirements for recycling.

Therefore, there is a need for new classes of sorbent materials that are able to capture water vapour over a range of humidities and offer low energy footprints for recycling.

### Summary of the Invention

Prussian Blue (Fe[Fe(CN)₆]_{0.75}·xH₂O) is a crystalline sorbent material discovered in the 18^{th} century which has been widely used as a pigment. The structure of Prussian Blue allows multiple substitutional and interstitial modifications of its chemical composition to afford a family of compounds called PB analogues (PBAs). PBAs are a generally promising class of sorbents due to their high capacity for water sorption into the pore structure and excellent framework stability.

One PBA material based upon Zn and Co having the formula (Zn[Co(CN)₆]_{0.667}·4H₂O) (termed ZnCo herein) has been found to adsorb high amounts of water (∼32 wt. %) when the material is in a cubic phase (Roque, J.; Reguera, E.; Balmaseda, J.; Rodriguez-Hernandez, J.; Reguera, L.; del Castillo, L. F., Porous hexacyanocobaltates(III): Role of the metal on the framework properties. Microporous Mesoporous Mater. 2007, 103, 57-71). However, ZnCo transforms to a hexagonal phase when subjected to mild stress, such as heating to 60 °C, and in this hexagonal phase ZnCo exhibits little or no water uptake. Such conditions are experienced by sorbent materials during typical water capture methods, particularly during a desorption step. Therefore, ZnCo as previously reported is unsuited to use as a sorbent material in water capture methods.

An iron-containing analogue of ZnCo has also been reported (termed FeZnCo herein), having the formula Zn₃₋ₐFeₐ[Co(CN)₆]₂·nH₂O wherein a>0.2 (Krap, C. P.; Zamora, B.; Reguera, L.; Reguera, E., Stabilization of cubic and rhombohedral phases of zinc hexacyanocobaltate (III). Microporous Mesoporous Mater. 2009, 120, 414-420). The water sorption performance of this material has not been reported.

It is one aim of the present invention, amongst others, to provide a crystalline sorbent material and/or a method of capturing water that addresses at least one disadvantage of the prior art, whether identified here or elsewhere, or to provide an alternative to existing crystalline sorbent materials. For instance, it may be an aim of the present invention to provide a method of capturing water using a crystalline sorbent material which has high water uptake, rapid sorption and desorption kinetics, and low heat required for cycling.

According to aspects of the present invention, there is provided a novel crystalline sorbent material, a method and a use as set forth in the appended claims. Other features of the invention will be apparent from the dependent claims, and from the description which follows.

According to a first aspect of the present invention, there is provided a crystalline sorbent material of formula:

AbM'[M(CN)₆]_{y}·nH₂O

wherein A is a group 1 metal; b is from 0.001 to 0.3; M' is a transition metal; M is iron or cobalt; y is from 0.65 to 0.80; and n is from 0 to 7.

Suitably the chemical composition of the crystalline sorbent material can be measured within an error margin of 1% for example 0.5% or 0.2%. Methods of measuring the chemical composition of crystalline sorbent materials will be known to a person skilled in the art and include measurements using inductively coupled plasma-optical emission spectrometry (ICP-OES), as described below.

The present invention relates to a crystalline sorbent material. Suitably the crystalline sorbent material of this first aspect is solid at room temperature and pressure, i.e. at 25 °C and 1 atm.

According to the above formula, n is from 0 to 7. Suitably n is from 3 to 6.

M' is a transition metal. Suitably M' is a first row transition metal. Suitably M' is selected from manganese, copper, iron, cobalt, zinc, chromium, vanadium and nickel. Suitably M' is zinc.

M is iron or cobalt. Suitably M and M' are different. Suitably M is cobalt.

In some embodiments, M' is zinc and M is cobalt. In such embodiments, the crystalline sorbent material suitably has the formula A_{b}Zn[Co(CN)₆]_{y}·nH₂O wherein A is a group 1 metal; b is from 0.001 to 0.3; y is from 0.65 to 0.80; and n is from 0 to 7.

A is a group 1 metal. Suitably A is selected from lithium, sodium and potassium. Suitably A is potassium.

In some embodiments A is potassium, M' is zinc and M is cobalt. In such embodiments the crystalline sorbent material suitably has the formula (K_{b}Zn[Co(CN)₆]_{y}·nH₂O), wherein b is from 0.001 to 0.3, y is from 0.65 to 0.80 and n is from 0 to 7.

b is from 0.001 to 3. In some embodiments b is from 0.005 to 0.12. In such embodiments the crystalline sorbent material is suitably of formula (K_{b}Zn[Co(CN)₆]_{y}·nH₂O), wherein b is from 0.005 to 0.12, y is from 0.65 to 0.80 and n is from 0 to 7. Suitably y is from 0.66 to 0.71. In such embodiments, the crystalline sorbent material may be considered to have a relatively low potassium content and may be referred to as a ROS-038X sorbent material.

In some embodiments b is from 0.12 to 0.3. In such embodiments the crystalline sorbent material is suitably of formula (K_{b}Zn[Co(CN)₆]_{y}·nH₂O), wherein b is from 0.12 to 0.3, y is from 0.65 to 0.80 and n is from 0 to 7. Suitably y is from 0.70 to 0.77. In such embodiments, the crystalline sorbent material may be considered to have a relatively high potassium content and may be referred to as a ROS-038Y sorbent material.

The crystalline sorbent material of this first aspect suitably comprises a crystal lattice extending in three dimensions. The crystalline sorbent material suitably comprises a porous structure comprising pores suitable for sorbing water on exposure to water vapour or liquid water.

The crystalline sorbent material is suitably formed from a unit cell which repeats in three dimensions to form a three-dimensional lattice structure. As will be known by the skilled person, a unit cell is characterized by six parameters. These parameters are three edges (a, *b* and c) and angles between them (*α*, *β* and γ). Using these parameters, a unit cell may be defined as cubic, tetragonal, orthorhombic, monoclinic, hexagonal, rhombohedral or triclinic.

Suitably the crystalline sorbent material has a cubic unit cell in which cell parameters range from 1.00 to 1.06 nm. The crystalline sorbent material may suitably be in a cubic phase with unit cell parameters of a = b = c = 1.02 nm and angles of 90 degrees.

The crystalline sorbent material may also be defined by a space group Fm-3m which represents the symmetry of the material.

Suitably the crystalline sorbent material is thermally stable. By this we mean that the crystalline sorbent material does not decompose when heated at moderate temperatures. Suitably the crystalline sorbent material is stable at temperatures beyond 150 °C.

Suitably the crystalline sorbent material is hydrolytically stable. By this we mean the crystalline sorbent material does not break down when subjected to exposure to water or water vapour. Suitably the crystalline sorbent material is stable when exposed to 75% RH at 40 °C for 3 months.

Suitably the crystalline sorbent material does not undergo a phase transition to a hexagonal phase when heated at temperatures of at least 60 °C, for example at least 80 °C or at least 100 °C.

Suitably the crystalline sorbent material does not undergo a phase transition to a hexagonal phase when heated at temperatures at least 30 °C in vacuum, for example at temperatures at least 40 °C.

The inventors have surprisingly found that the presence of A⁺ cations stabilises the cubic phase of the crystalline sorbent material, thereby overcoming the problem of the phase transformation to a hexagonal phase that occurs in known PBAs such as ZnCo.

This stable cubic phase structure suitably provides a stable porous structure comprising pores suitable for sorbing water on exposure to water vapour or liquid water. Therefore, water can suitably enter into the pores of the crystalline sorbent material. Water is suitably held within the pores by intermolecular interactions. This may be considered a process of absorbing water into the bulk of the crystalline sorbent material. In another sense, this may be considered to be a process of adsorbing the water molecules onto a surface of the crystalline sorbent material, whether that be the outer surface of the material or the inner surface of the pores comprised within the crystal structure of the crystalline sorbent material.

With respect to the structure of Prussian Blue type compounds, these materials are known to have extremely complex structures having defect sites that are not amenable to characterisation using standard structural methods. The water sorption performance of the crystalline sorbent materials of the present invention is believed to be almost entirely due to these defect sites, which may be missing CO(CN)₆ units. Without being bound by theory, it is believed that the potassium ions in the crystalline sorbent materials of the present invention are located in pores created by these defects sites which causes the improvement in stability of the material in the cubic phase.

These crystalline sorbent materials of the first aspect are considered to mainly function by taking water into the pores in their crystal structure. The terms "capture" and alternatively "sorbing" are used herein to describe this process which may be considered to be either adsorbing or absorbing.

Herein the terms "adsorb", "absorb", "adsorbed", "absorbed", "adsorbing" and "absorbing" are used to denote this process of water being taken up (i.e. captured) by the crystalline sorbent material, whether or not this process is considered a true "adsorbing" or "absorbing" process.

The term "release" is used herein to denote a desorption process.

The inventors have surprisingly found that crystalline sorbent materials of this first aspect may have desirable water capture properties for use in industrial water capture processes and devices. For example, the crystalline sorbent materials may have a relatively high capacity for water uptake and rapid kinetics of adsorption and desorption of water, which are particularly advantageous for industrial water capture where water delivery over time is an important factor in the economic feasibility of such processes.

For example, the crystalline sorbent material suitably has a water uptake capacity of at least 15 wt. %, suitably at least 20 wt. %, at least 25 wt. %, at least 30 wt. % or at least 35 wt. %.

In embodiments wherein the crystalline sorbent material has the formula (K_{b}Zn[Co(CN)₆]_{y}·nH₂O), wherein b is from 0.005 to 0.12, y is from 0.65 to 0.80 and n is from 0 to 7 (i.e. is a ROS-038X sorbent material), the water uptake capacity of the crystalline sorbent material is suitably greater than 25 wt. %, suitably greater than or approximate to 30 wt. %.

In embodiments wherein the crystalline sorbent material has the formula (K_{b}Zn[Co(CN)₆]_{y}·nH₂O), wherein b is from 0.12 to 0.3, y is from 0.65 to 0.80 and n is from 0 to 7 (i.e. is a ROS-038Y sorbent material), the water uptake capacity of the crystalline sorbent material is suitably greater than 20 wt. %, suitably approximately 20 to 25 wt. %.

Suitably the crystalline sorbent material of this first aspect has fast kinetics of adsorption. Suitably the crystalline sorbent material reaches at least 50% of full loading of water within 5 minutes under ambient temperature and ambient relative humidity. Suitably the crystalline sorbent material reaches at least 80%, for example 90%, of full loading of water within 10 minutes under ambient temperature and ambient relative humidity. Suitably the crystalline sorbent material may be considered to be fully loaded of water (i.e. at least 95% of full loading) within 10 minutes under ambient temperature and ambient relative humidity.

Suitably the crystalline sorbent material has fast kinetics of desorption. Suitably the adsorption and desorption processes occur at similar rates in the crystalline sorbent material and follow a similar pathway. The hysteresis in the crystalline sorbent material is suitably small and there is preferably little difference between the adsorption threshold pressure and the desorption threshold pressure. The adsorption-desorption process is therefore suitably reversible.

Suitably the desorption occurs at a temperature of below 75 °C. Suitably the desorption occurs at a temperature of below 70 °C, for example below 65 °C. Suitably the desorption occurs at a temperature of below 60 °C, below 55 °C or below 50 °C. Therefore, the crystalline sorbent material of the present invention can advantageously be desorbed of water (i.e. regenerated for a subsequent water sorption cycle) using a relatively low amount of heat energy compared with known sorbent materials. This reduces the energy consumption of and hence the environmental impact of a water capture process using the crystalline sorbent material compared with known water capture processes.

Suitably the crystalline sorbent material retains its high water capacity and fast kinetics of adsorption and desorption over repeated cycles of sorption and desorption in use. Suitably the water capacity and kinetics or adsorption and desorption remain substantially unchanged over 100 cycles of sorption and desorption, suitably over 1,000 cycles, suitably over 2,000 cycles or over 10,000 cycles of sorption and desorption.

Due to these advantages, the crystalline sorbent materials can be effectively and efficiently used in a variety of processes, such as in HVAC systems and in desalination methods. The water captured may be removed from the crystalline sorbent material to advantageously provide a supply of purified water for the various uses described herein.

Without being bound by theory, it is believed that the crystalline sorbent materials used in the present invention preferentially capture water molecules due to the materials having a pore size (effective pore size) and pore chemistry which is complementary to water and which favours water adsorption. Such materials may provide excellent water selectivity and capacity, which will be further demonstrated below.

According to a second aspect of the present invention, there is provided a method of preparing a crystalline sorbent material according the first aspect, the method comprising the steps of:
(a) reacting a source of B_{c}[M(CN)₆] with a source of M'Xₓ; and
(b) obtaining the crystalline sorbent material;
wherein B is H or a group 1 metal; c is from 2 to 4; M' is a transition metal; M is iron or cobalt; X is an anion; and x is from 1 to 4.

Suitably the method is carried out in an aqueous solution, suitably in water. Therefore, the method of this second aspect suitably comprises the steps of:
(a) reacting a source of B_{c}[M(CN)₆] with a source of M'Xₓ in water; and
(b) precipitating the crystalline sorbent material from water;
wherein B is H or a group 1 metal; c is from 2 to 4; M' is a transition metal; M is iron or cobalt; X is an anion; and x is from 1 to 4.

Carrying out the method in water suitably provides an environmentally benign process for preparing the crystalline sorbent material which avoids the negative environmental impact associated with using organic solvents. Suitably the method produces minimal by-products and can be considered to be a green chemistry process. Suitably the method is readily scalable whilst retaining these benefits.

Preferred features of the first aspect of the invention also apply to this second aspect.

The method of this second aspect provides a crystalline sorbent material according to the first aspect and therefore a crystalline sorbent material having the formula A_{b}M'[M(CN)₆]_{y}·nH₂O as defined above.

Suitably step (a) involves a source of the A_{b} atoms of the crystalline sorbent material produced by the method of this second aspect. Suitably the source of the A_{b} atoms is the B_{c}[M(CN)₆] material used in step (a).

In the B_{c}[M(CN)₆] material used in step (a), B is H or a group 1 metal. In some embodiments B is a group 1 metal and is equivalent to A as defined in relation to the crystalline sorbent material of the first aspect. Therefore, in such embodiments, B_{c} provides the A_{b} atoms of the crystalline sorbent material. Suitably B is potassium. Suitably M is cobalt. Suitably B is potassium and M is cobalt.

c is from 2 to 4. The value of c will suitably be modified to obtain a neutral compound. Suitably c is 3.

In some embodiments, the B_{c}[M(CN)₆] material is K₃[Co(CN)₆].

In some embodiments B is a hydrogen cation such as a proton. In such embodiments, the source of B_{c}[M(CN)₆] suitably comprises an amount of a group 1 metal A to provide the atom A in the crystalline sorbent material. In such embodiments, the method suitably provides the crystalline sorbent material having a relatively low amount of such A atoms. In such embodiments the source of B_{c}[M(CN)₆] may contain a trace amount of group I metal A, for example from 1 to 10 ppm of A, or 2 to 6 ppm of A. In such embodiments, the B_{c}[M(CN)₆] material is suitably H₃[Co(CN)₆], suitably containing a trace amount of potassium, for example from 1 to 10 ppm of potassium or from 2 to 6 ppm of potassium, for example around 4 ppm of potassium. The amount of A in the B_{c}[M(CN)₆] or H₃[Co(CN)₆] material can be determined by ICP-OES as discussed below.

In the M'Xₓ used in step (a), X is an anion. Suitably X is selected from chloride, fluoride, bromide, nitrate, nitrite, sulphate, and phosphate. In preferred embodiments X is selected from nitrate and sulphate. The value of x will suitably be modified to obtain a neutral compound.

M'Xx may suitably be present in hydrated form and may therefore comprise additional water molecules.

Suitably M' is Zn. Suitably M'Xₓ is Zn(SO₄)₂·7H₂O, Zn(NO₃)₂·6H₂O or ZnCl₂.

Suitably this second aspect provides a method of preparing a crystalline sorbent material of formula (K_{b}Zn[Co(CN)₆]_{y}·nH₂O);
(a) reacting a source of B₃[Co(CN)₆] with a source of ZnXₓ in water; and
(b) precipitating the crystalline sorbent material from water;
wherein B is H or K and when B is H step (a) includes reacting a source of K with the source of B₃[Co(CN)₆] and the source of ZnXₓ;
wherein b is from 0.005 to 0.12, y is from 0.65 to 0.80, n is from 0 to 7, X is an anion and x is from 1 to 4.

The crystalline sorbent material of the present invention may be considered to be an analogue to Prussian Blue. In the Prussian Blue structure of formula M[M'(CN)₆], M and M' occupy alternate lattice vertices and are octahedrally coordinated by bridging cyanide ions (CN⁻) at the lattice edges. Charge balance is obtained by distribution of vacancies within the unit cell. Such vacancies may form a porous structure with greater surface area.

The inventors have surprisingly found that a small difference in the number of octahedral units can have an effect on the structural vacancies present within the unit cell, resulting in a crystalline sorbent material having water sorption isotherm with highly favourable features for water capture and release.

According to a third aspect of the present invention, there is provided a method of capturing water from a composition comprising water and/or water vapour, the method comprising:
(i) providing a crystalline sorbent material of formula A_{b}M'[M(CN)₆]_{y}·nH₂O; and
(ii) contacting the crystalline sorbent material with the composition comprising water;
wherein upon contact with the composition comprising water and/or water vapour the crystalline sorbent material sorbs water; and wherein A is a group 1 metal; b is from 0.001 to 0.3; M' is a transition metal; M is iron or cobalt; y is from 0.65 to 0.80; and n is from 0 to 7.

The crystalline sorbent material used in the method of this third aspect may have any of the features and advantages described in relation to the first aspect.

Suitably in the method of the first aspect, steps (i) and (ii) are carried out sequentially, suitably in the order step (i) followed by step (ii).

In some embodiments the method of this third aspect may involve the use of two or more crystalline sorbent materials. In such embodiments any reference to the crystalline sorbent materials includes mixtures.

In the methods of this third aspect, the composition comprising water or water vapour may be any composition comprising water and/or water vapour. The composition may be a gaseous composition comprising watervapour, suitably air. The composition may be a liquid composition comprising water, suitably a complex liquid composition comprising water and one or more further components, for example salted water including sea and ocean water, brackish water or wastewater.

In some embodiments water is not the major component of the composition and may, for example, be present as an impurity. In such embodiments the method of the third aspect may be used to remove water or water vapour, for example to create an anhydrous composition or to provide dehumidified air.

In some embodiments water is the major component of the composition, for example a liquid aqueous composition comprising impurities such as dissolved salts. In such embodiments the method of this third aspect may be used to provide purified water.

In some embodiments the composition comprising water or water vapour may be treated before use in the present invention. In preferred embodiments the composition comprising water or water vapour is not treated before use.

Step (ii) of the method of the third aspect involves contacting the crystalline sorbent material with the composition comprising water or water vapour to capture water into the crystalline sorbent material. Suitably the crystalline sorbent material is directly contacted with the composition comprising water or water vapour.

In embodiments wherein the composition is a liquid composition comprising water, the liquid composition comprising water may be any body of water. The liquid composition comprising water may be still or standing water or may be moving, for example flowing water.

Suitably contact between the crystalline sorbent material and the composition comprising water or water vapour is sufficient to allow adsorption or absorption of water from the composition comprising water and/or water vapour into the pores of the crystalline sorbent material. The crystalline sorbent material is suitably provided in a form that facilitates contact with the composition comprising water or water vapour.

The crystalline sorbent material may be provided as a powder. Suitably when contacted with the composition comprising water or water vapour the crystalline powder may be wetted. In embodiments wherein the composition is a liquid composition comprising water, the sorbent powder may be dispersed into the liquid composition comprising water.

The crystalline sorbent material may be provided in the form of shaped bodies, for example in the form of pellets, granules or tablets. In embodiments wherein the composition comprising water is a liquid composition comprising water, such pellets, granules or tablets may be placed in the liquid composition comprising water or exposed to the liquid composition comprising water.

The crystalline sorbent material may be provided as a sheet material.

The crystalline sorbent material may be provided as part of a membrane. In such embodiments the composition comprising water and/or water vapour may flow across or through the membrane.

Preferably the crystalline sorbent material is provided within or carried on a support. Suitably the support may help to maintain the form of the crystalline sorbent material under normal conditions of use.

The crystalline sorbent material is suitably arranged on the support in a configuration to ensure maximum sorption. The crystalline sorbent material may be arranged on the surface of the support or incorporated within the body of the support.

The support may be selected from any suitable polymeric, plastic, metal, resin and/or composite material. A person skilled in the art will be familiar with these types of material and will be able to select the most appropriate support for the device.

In some embodiments the support is a polymer material. In one embodiment the support comprises an acrylic polymer. Suitable acrylic polymers include commercially available HYCAR^{®} 26410 from the Lubrizol Corporation.

In one embodiment the support comprises a cellulosic material, for example paper. The support may comprise a composite material of paper and another polymer.

The crystalline sorbent material and the support may be considered to provide a sorbent composition.

The sorbent composition suitably comprises from 10 to 90 wt. % of the crystalline sorbent material, suitably from 30 to 70 wt. % of the crystalline sorbent material, suitably from 40 to 60 wt. % of the crystalline sorbent material, suitably approximately 50 wt. % of the crystalline sorbent material.

The sorbent composition suitably comprises from 10 to 90 wt. % of the crystalline sorbent material and from 90 to 10 wt. % of the support, suitably from 30 to 70 wt. % of the crystalline sorbent material and from 70 to 30 wt. % of the support, suitably from 40 to 60 wt. % of the crystalline sorbent material and from 60 to 40 wt. % of the support. Suitably the sorbent composition consists essentially of the crystalline sorbent material and the support. Suitably the sorbent composition consists of the crystalline sorbent material and the support.

In some embodiments the crystalline sorbent material is contacted with flowing or running water. The crystalline sorbent material may be positioned so that the liquid composition comprising water falls onto the crystalline sorbent material. For example the crystalline sorbent material may be placed underneath a stream of flowing water.

The crystalline sorbent material may be positioned so that the composition comprising water or water vapour travels through or over the crystalline sorbent material. In some embodiments the composition comprising water and/or water vapour may flow through a channel and the crystalline sorbent material may be provided along or within the channel.

In some preferred embodiments the crystalline sorbent material is contacted with a composition comprising water or water vapour housed within a container. The container may comprise means for delivering gas and/or liquid to the container.

Suitably in step (b) the crystalline sorbent material is at least partially immersed in the composition comprising water and/or water vapour.

In some embodiments the crystalline sorbent material may be fully immersed in the composition comprising water or water vapour.

Suitably the crystalline sorbent material is provided on a sorbent rotor which rotates portions of the crystalline sorbent material into and out of contact with the composition comprising water or water vapour.

In some embodiments the method of the third aspect comprises a further step (iii) desorbing water from the crystalline sorbent material as water vapour. Suitably step (iii) is performed after step (ii).

Suitably desorption occurs when the crystalline sorbent material is subjected to a stimulus, for example a change in humidity, a change in pressure, a change in temperature or a change in two or more of pressure, temperature and humidity. In some embodiments this stimulus is provided by separating the crystalline sorbent material from the liquid composition comprising water.

Desorption may occur on application of external energy. In some preferred embodiments desorption occurs upon a reduction in humidity and/or an increase in temperature.

Step (iii) may involve contacting the crystalline sorbent material with a humid gas mixture stream, for example an air stream. In some preferred embodiments in step (iii) air is allowed to flow over or through the crystalline sorbent material or a stream of humid air is directed over or through the crystalline sorbent material.

In preferred embodiments in step (iii) the crystalline sorbent material is contacted with warm air as part of a heat swing process and/or dry air as part of a humidity swing process and/or subjected to vacuum as part of a vacuum swing process.

In some embodiments, step (iii) involves contacting the crystalline sorbent material with warm air having a temperature of from 2 °C to 140 °C, preferably from 20 °C to 100 °C, for example from 25 °C to 90 °C or from 30 °C to 80 °C.

Suitably the warm air has a temperature of from 35 °C to 100 °C, suitably from 35 °C to 75 °C for example of from 40 °C to 60 °C.

In some embodiments in step (iii) the crystalline sorbent material is contacted with dry air, suitably having a humidity of less than 50 grains, preferably less than 30 grains, more preferably less than 20 grains. The grain unit will be known to the skilled person and is an absolute measure of how much water is present in 1 lb of air under any temperature condition.

In some embodiments, step (iii) involves applying a vacuum to the crystalline sorbent material to desorb the water / water vapour. Suitably a vacuum having a pressure of 1 torr or below (0.005 Torr) is applied, suitably of 0.1 torr or below (0.005 Torr). The vacuum applied to the crystalline sorbent material in step (iii) may be advantageously provided by readily available vacuum pump equipment.

Suitably during step (iii) water molecules are desorbed as gaseous water molecules or water vapour.

Suitably the crystalline sorbent material desorbs at least 120 cm³ water vapour/cm³ material when subjected to a stimulus, for example a change in temperature or change in humidity. Suitably the crystalline sorbent material desorbs at least 130 cm³ water vapour/cm³ material, for example at least 140 cm³ water vapour/cm³ material when subjected to a stimulus. Suitably the crystalline sorbent material desorbs at least 150 cm³ water vapour/cm³ material when subjected to a stimulus.

Suitably the crystalline sorbent material desorbs at least 20% of the captured water within 5 minutes under ambient conditions of temperature and humidity (27 °C, 1 atm). Suitably the crystalline sorbent material desorbs at least 30%, for example at least 40%, of the captured water within 10 minutes under ambient conditions of temperature and humidity. Suitably the crystalline sorbent material desorbs at least 50% of the captured water within 1 hour under ambient conditions of temperature of humidity.

Suitably in step (ii) at least 10 wt. % of water based on the weight of the crystalline sorbent material, is captured in 10 minutes, suitably at least 15 wt. %, for example at least 18 wt. %, for example at least 20 wt. % or at least 25 wt. %.

The inventors have found that the use of the specified crystalline sorbent materials provides superior working capacity performance compared to known water-sorbent materials such as Syloid^{®} AI-1.

The inventors have found that the use of the specified crystalline sorbent materials provides superior water uptake performance compared to known water-sorbent materials such as Syloid^{®} AI-1.

The inventors have found that the use of the specified crystalline sorbent materials provides superior water delivery performance compared to known water-sorbent materials such as Syloid^{®} AI-1.

In some embodiments the method of the third aspect comprises a further step (iv) of condensing the desorbed water vapour to provide liquid water. Suitably step (iv) is performed after step (iii).

The water vapour may condense without an external stimulus due to the temperature and/or humidity conditions of the environment present. In preferred embodiments the water vapour desorbed from the crystalline sorbent material is condensed using an external stimulus.

Methods of condensing the water vapour to liquid water will be known by the person skilled in the art. For example the water vapour may be cooled or pressurised. Cooling may be active or passive.

In preferred embodiments sorption and desorption of water is reversible.

In especially preferred embodiments sorption and desorption are reversible over several cycles, suitably many thousands of cycles.

The water delivered from the crystalline sorbent material is suitably ultra-high purity water. This water vapour is suitably condensed to provide ultra-high purity liquid water.

By ultra-high purity water we mean to refer to water without any contaminant species, such as organic and inorganic compounds and dissolved gases. Suitably there will be less than 100 ppm of contaminant species, suitably less than 50 ppm, for example less than 20 ppm. In some embodiments water comprising less than 10 ppm or less than 5ppm contaminant species may be provided.

Therefore, in a fourth aspect, the present invention may provide a method of delivering water to a locus from a composition comprising water or water vapour, the method comprising the steps of:
(1) providing a crystalline sorbent material of formula A_{b}M'[M(CN)₆]_{y}·nH₂O;
(2) contacting the crystalline sorbent material with water or water vapour to capture water into the crystalline sorbent material;
(3) optionally transporting and/or storing the crystalline sorbent material;
(4) applying a stimulus to the crystalline sorbent material to effect desorption of water retained therein; and
(5) collecting desorbed water at the locus;
wherein A is a group 1 metal; b is from 0.001 to 0.3; M' is a transition metal; M is iron or cobalt; y is from 0.65 to 0.80; and n is from 0 to 7.

Suitably in the method of the fourth aspect, steps (1) to (5) are carried out sequentially in numerical order.

Where appropriate, the suitable features and advantages described in relation to the first and third aspect apply to this fourth aspect.

According to a fifth aspect of the present invention there is provided a use of a crystalline sorbent material of formula A_{b}M'[M(CN)₆]_{y}·nH₂O to capture water or water vapour from a composition comprising water or water vapour; wherein A is a group 1 metal; b is from 0.001 to 0.3; M' is a transition metal; M is iron or cobalt; y is from 0.65 to 0.80; and n is from 0 to 7.

The crystalline sorbent material is as described in relation to the first aspect.

Suitably in the use according to the fifth aspect at least 10 wt. % of water based on the weight of the crystalline sorbent material, is captured in 10 minutes, suitably at least 15 wt. %, for example at least 18 wt. %, for example at least 20 wt. % or at least 25 wt. %.

The inventors have found that the use of the specified crystalline sorbent materials provides superior water delivery performance compared to known water-sorbent materials such as Syloid^{®} AI-1.

### Examples

### Materials and analytical methods

The following materials were obtained from the sources noted. Potassium hexacyanocobaltate(III) (K₃[Co(CN)₆]) - Alfa Aesar; zinc sulphate heptahydrate (Zn(SO₄)₂·7H₂O) - Alfa Aesar; zinc nitrate hexahydrate (Zn(NO₃)₂·6H₂O) - Sigma Aldrich; zinc chloride (ZnCl₂) - Sigma Aldrich; and sulphuric acid (H₂SO₄, 95-97%) - Sigma-Aldrich. These materials were directly used without further purification. Millipore grade water was used for the synthesis of example materials described below. Zeolite 13X, Syloid^{®} AL-1 and Silica Gel were obtained from commercial suppliers.

### Powder X-ray diffraction (PXRD)

PXRD patterns were recorded at room temperature on a PANalytical Empyrean^{™} diffractometer equipped with a PIXcel^{3D} detector operating in scanning line detector mode with an active length of 4 utilizing 255 channels. The diffractometer is outfitted with an Empyrean Cu LFF (long fine-focus) HR (9430 033 7310x) tube operated at 40 kV and 40 mA and CuK_{α} radiation (λ_{α} = 1.540598 Å) was used for diffraction experiments. Continuous scanning mode with the goniometer in the theta-theta orientation was used to collect the data. Incident beam optics included the Fixed Divergences slit with anti-scatter slit PreFIX module, with a 1/8° divergence slit and a 1/4° anti-scatter slit, as well as a 10 mm fixed incident beam mask and a Soller slit (0.04 rad). Divergent beam optics included a P7.5 anti-scatter slit, a Soller slit (0.04 rad), and a Ni-*β* filter. In a typical experiment, approximately 20 mg of fine powder sample was loaded on a zero background silicon disc. The data were collected from 5°-45° (2θ) with a step-size of 0.0131303° and a scan time of 30 seconds per step. Raw data were analyzed using the X'Pert HighScore Plus^{™} software V 4.1 (PANalytical, The Netherlands).

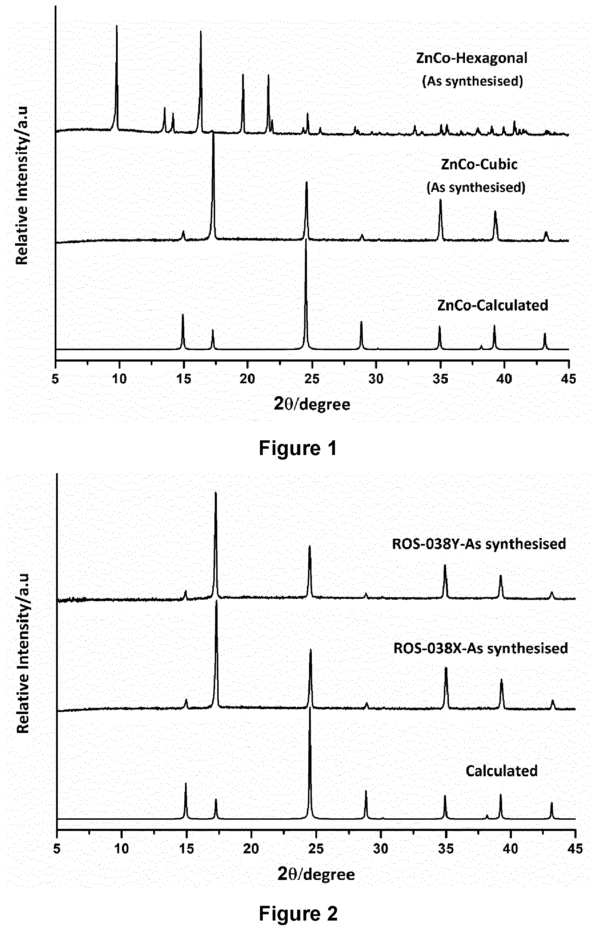

Figure 1 shows a comparison of PXRD patterns calculated for Zn[Co(CN)₆]_{0.667}·4H₂O (termed ZnCo herein) and obtained by experiment as described above for ZnCo in the cubic phase and ZnCo in the hexagonal phase.

### In-situ Variable Temperature Powder X-ray Diffraction (VT-PXRD)

Diffractograms at different temperature were recorded using a PANalytical X'Pert Pro-MPD diffractometer equipped with a PIXcel3D detector operating in scanning line detector mode with an active length of 4 utilizing 255 channels. Anton Paar TTK 450 stage coupled with the Anton Paar TCU 110 Temperature Control Unit was used to record the variable temperature diffractograms. The diffractometer was outfitted with a Cu LFF (long fine-focus) HR (9430 033 7300x) tube operated at 40 kV and 40 mA and CuKα radiation (λα = 1.54056 Å). A continuous scanning mode with the goniometer in the theta-theta orientation was used to collect the data. Incident beam optics included a fixed divergences slit, with a 1/4° divergence slit and a Soller slit (0.04 rad). Divergent beam optics included a P7.5 anti-scatter slit, a Soller slit (0.04 rad), and a Ni-β filter. In a typical experiment, 50 mg of sample was dried, ground into a fine powder and loaded on a sample holder made in an Anton Paar TTK 450 chamber. The data were collected from 5°-40° (2θ) with a step-size of 0.0167113° and a scan time of 50 seconds per step. Raw data were analysed using the X'Pert HighScore Plus^{™} software V 4.1 (PANalytical, The Netherlands). Each sample was heated up to 240 °C under N₂ atmosphere and then cooled to room temperature.

### Thermogravimetric analysis (TGA)

TGA Thermograms were recorded under nitrogen using a TA Q50 V20.13 Build 39 instrument. Platinum pans and a flow rate of 60 mL/min for the nitrogen gas were used for the experiments. The data were collected in the high-resolution dynamic mode with a sensitivity of 1.0, a resolution of 4.0, and a temperature ramp of 10 °C/min up to 550 °C. The data was evaluated using the T.A. Universal Analysis suite for Windows XP/Vista Version 4.5A.

### ICP-OES analysis

ICP-OES analysis was carried out on Agilent Technologies 5100 ICP-OES instrument. In a typical experiment, samples were prepared and analysed as follows. 10 mg of each sample was dissolved in 4 mL aqua regia. A 1 mL aliquot was taken from this solution and diluted with 4 mL of 1 M HNO₃. For each sample, three sets of aliquots were prepared and injected into the auto sampler. Prior to analysis, the instrument was calibrated with standard solutions of all the tested elements (Co, K, Zn and S) in the appropriate concentration range (0-250 ppm). Individual elements were identified from peaks at characteristic positions (Co, 228 nm and 238 nm; K, 769 nm; Zn, 206 nm and 334 nm) with best intensity (to avoid interference). The concentration (in ppm) of each element was calculated using standard calibration curves and is tabulated in Table 1 below.

### Intrinsic dynamic vapour sorption (DVS) measurements

Water vapour adsorption-desorption experiments at atmospheric pressure and 27 °C were performed using a DVS Intrinsic analyser (from Surface Measurement Systems). The water vapour sorption isotherms were measured using approximately 5-30 mg of sample. Pure HPLC grade water was used as the adsorbate for these measurements and temperature was maintained by enclosing the system in a temperature-controlled incubator. Prior to the sorption analysis, each sample was pre-treated at 40 °C for 6 h, followed by a cooling down at 27 °C for 60 min.

### Vacuum DVS measurements

Vacuum DVS measurements were conducted using a Surface Measurement System DVS Vacuum instrument. The DVS Vacuum instrument used for these studies measures the uptake and loss of water vapour gravimetrically. Activated and degassed samples were further degassed in-situ under high vacuum (2·10⁻⁶ Torr) to establish the dry mass. Adsorption/desorption cycles were used for the determination of recyclability and working capacity of ROS-038 and Syloid^{®} AL-1, respectively.

Recycling tests were performed in a temperature-controlled incubator at 27 °C. For each material, ∼135 cycles of adsorption (0→60% P/Po, 5 min) followed by desorption (60→0% P/Po, 5 min) were conducted at 27 °C. Approximately 5-10 mg of sample were used for each experiment. The mass of every sample was determined by comparison with an empty reference pan and recorded by a high-resolution microbalance with a mass resolution of ± 0.1 *µ*g. The high mass resolution and its excellent baseline stability allow the instrument to measure the adsorption and desorption of very small amounts of water molecules. The vapour partial pressure around the sample is controlled by mixing saturated and dry carrier vapour streams using electronic mass flow controllers. The temperature was maintained constant at 27 ± 0.1 °C by enclosing the entire system in a temperature-controlled incubator. Pure water (HPLC Gradient Grade, Fisher Chemical) was used as the adsorbate for the recycling studies.

Intelligent gravimetric analyser (IGA) measurements.

Water vapour adsorption-desorption experiments at atmospheric pressure (1013 mbar, 760 torr) were performed using a IGAsorp dynamic vapour sorption (DVS) analyser from Hiden Isochema Ltd., UK. Prior to the experiment, the sample was allowed to reach temperature and humidity equilibria within the chamber for a specific period of time. The sample (ca. 5-40 mg) was exposed to desired % RH (30, 60 or 0% RH) and temperatures, in the adsorption (27 °C) / desorption (49 °C or 60 °C) branches, respectively. Consequently, recyclability and regeneration profiles of water vapour adsorption and desorption were obtained.

### Preparation of crystalline sorbent materials

### Example 1: K_{0.10}Zn[Co(CN)₆]_{0.70}·4H₂O

A solution of K₃[Co(CN)₆] (2 mmol, 664.6 mg) in 20 mL of H₂O was added to a stirred solution of Zn(SO₄)₂·7H₂O (2 mmol, 575.1 mg) in 20 mL of H₂O. The resulting precipitate was stirred at room temperature for 30 minutes, filtered, and washed with H₂O. Yield: 530 mg, ∼94%. The phase purity of the material was confirmed by identifying the respective PXRD peaks of PBA at 2θ (°) 14.9, 17.3, 24.5, 28.8, 35, 39.2, 43.2 (see Figure 2). The composition of Example 1 was determined by ICP-OES analysis as described above and the results are shown in Table 1. The number of water molecules was calculated from TGA data.

### Example 2: K_{0.009}Zn[Co(CN)₆]_{0.669}·4.5H₂O

H₃Co(CN)₆ was synthesised from K₃[Co(CN)₆] by a previously reported procedure (US 7,022,641 B2). The H₃Co(CN)₆ produced by this method contained a small amount of potassium ion impurity (0.5-1%). A solution of H₃[Co(CN)₆] (containing 0.5-1% potassium compared to cobalt) (1 mmol, 218 mg) in 100 mL of H₂O was added dropwise to a stirred solution of Zn(SO₄)₂·7H₂O (1 mmol, 287 mg) in 100 mL of H₂O over a period of 15 minutes. The resulting precipitate was stirred at room temperature for 30 minutes, filtered, and washed with H₂O. Yield: 250 mg, ∼87%.

The K⁺ in H₃[Co(CN)₆] was found to be as follows, as quantified by ICP-OES.

**ICP-OES analysis of H₃[Co(CN)₆]:**

| **Sample** | **Co (ppm)** | **K (ppm)** | **Co Molar** | **K Molar** | **K/Co** | **Calculated formula** |
|---|---|---|---|---|---|---|
| **H₃CO(CN)₆** | 110.37 | 4.01 | 1.872 | 0.102 | 0.054 | K_{0.054}H₃[Co(CN)₆] |

Figure 2 shows a comparison of PXRD patterns calculated for ZnCo (using the data provided in Roque *et al.* 2007 cited above) and obtained by experiment as described above for Example 1 (as synthesized) and Example 9 (as synthesized) measured at 25 °C. The cubic phase purity of the material was confirmed by identifying the respective PXRD peaks at the following characteristic 2θ(°) positions: 14.9, 17.3, 24.5, 28.8, 35, 39.2, 43.2 (see Figure 2). The composition of Example 2 was determined by ICP-OES analysis as described above and the results are shown in Table 1. The number of water molecules was calculated from TGA data.

### Example 3: K_{0.02}Zn[Co(CN)₆]_{0.676}·4.2H₂O

A solution of K₃[Co(CN)₆] (1 mmol, 332 mg) in 10 mL of H₂O was added dropwise to a stirred solution of in Zn(NO₃)₂·6H₂O (1.8 mmol, 535 mg) 10 mL of H₂O over a period of 15 minutes. The resulting precipitate was stirred at room temperature for 24 hours, filtered, and washed with H₂O. Yield: 400 mg, ∼77%. The cubic phase purity of the material was confirmed by identifying the respective PXRD peaks of PBA at the following characteristic 2θ(°)positions: 14.9, 17.3, 24.5, 28.8, 35, 39.2, 43.2 (see Figure 2). The composition of Example 3 was determined by ICP-OES analysis as described above and the results are shown in Table 1. The number of water molecules was calculated from TGA data.

### Example 4: K_{0.03}Zn[Co(CN)₆]_{0.677}·4H₂O

A solution of K₃[Co(CN)₆] (1 mmol, 332 mg) in 100 mL of H₂O was added to a stirred solution of Zn(SO₄)₂·7H₂O (1 mmol, 287 mg) in 100 mL of H₂O. The resulting precipitate was stirred at room temperature for 30 minutes and left undisturbed for 24 hours, then filtered and washed with H₂O. Yield: 190 mg, ∼66%. The cubic phase purity of the material was confirmed by identifying the respective PXRD peaks of PBA at the following characteristic 2θ(°)positions: 14.9, 17.3, 24.5, 28.8, 35, 39.2, 43.2 (see Figure 2). The composition of Example 4 was determined by ICP-OES analysis as described above and the results are shown in Table 1. The number of water molecules was calculated from TGA data.

### Example 5: K_{0.06}Zn[Co(CN)₆]_{0.688}·3.5H₂O

2.4 g of polyvinylpyrrolidone (PVP) was added to a solution Zn(NO₃)₂·6H₂O (0.71 mmol, 214 mg) in 80 mL H₂O and stirred until the solution cleared. To this, a solution of K₃[Co(CN)₆] (0.4 mmol, 132.9 mg) in 80 mL of H₂O and was added dropwise for a period of 30 minutes. The resulting mixture was further stirred for 30 minutes, filtered, and washed with H₂O. Yield: 150 mg, ∼76%. The cubic phase purity of the material was confirmed by identifying the respective PXRD peaks of PBA at the following characteristic 2θ(°)positions: 14.9, 17.3, 24.5, 28.8, 35, 39.2, 43.2 (see Figure 2). The composition of Example 5 was determined by ICP-OES analysis as described above and the results are shown in Table 1. The number of water molecules was calculated from TGA data.

### Example 6: K_{0.11}Zn[Co(CN)₆]_{0.702}·3.8H₂O

K₃[Co(CN)₆] (1.52 mmol, 521 mg) and ZnCl₂ (2.28 mmol, 317 mg) were taken as solids and 50 mL of H₂O was added, stirred for 10 minutes. The resulting suspension was shaken on a benchtop shaker for 24 hrs (400 rpm). The slurry was centrifuged and the resulting solid was washed 3 times with distilled water, air dried. Yield: 650 mg, ∼98%. The cubic phase purity of the material was confirmed by identifying the respective PXRD peaks of PBA at the following characteristic 2θ(°) positions: 14.9, 17.3, 24.5, 28.8, 35, 39.2, 43.2 (see Figure 2). The composition of Example 6 was determined by ICP-OES analysis as described above and the results are shown in Table 1. The number of water molecules was calculated from TGA data.

### Example 7: K_{0.12}Zn[Co(CN)₆]_{0.709}·3.5H₂O

A solution of K₃[Co(CN)₆] (2 mmol, 664.6 mg) in 10 mL of H₂O was added to a stirred solution of Zn(SO₄)₂·7H₂O (2 mmol, 575.1 mg) in 10 mL of H₂O. The resulting precipitate was stirred at room temperature for 30 minutes, filtered, and washed with H₂O. Yield: 503 mg, ∼89%. The cubic phase purity of the material was confirmed by identifying the respective PXRD peaks of PBA at the following characteristic 2θ(°)positions: 14.9, 17.3, 24.5, 28.8, 35, 39.2, 43.2 (see Figure 2). The composition of Example 7 was determined by ICP-OES analysis as described above and the results are shown in Table 1. The number of water molecules was calculated from TGA data.

### Example 8: K_{0.13}Zn[Co(CN)₆]_{0.711}·4H₂O

A solution of K₃[Co(CN)₆] (2 mmol, 664.6 mg) in 5 mL of H₂O was added to a stirred solution of Zn(SO₄)₂·7H₂O (2 mmol, 575.1 mg) in 5 mL of H₂O. The resulting precipitate was stirred at room temperature for 30 minutes, filtered, and washed with H₂O. Yield: 540 mg, ∼92%. The cubic phase purity of the material was confirmed by identifying the respective PXRD peaks of PBA at the following characteristic 2θ(°)positions: 14.9, 17.3, 24.5, 28.8, 35, 39.2, 43.2 (see Figure 2). The composition of Example 8 was determined by ICP-OES analysis as described above and the results are shown in Table 1. The number of water molecules was calculated from TGA data.

### Example 9: K_{0.25}Zn[Co(CN)₆]_{0.75}·3.8H₂O

A solution of K₃[Co(CN)₆] (0.34 mol, 114.9 g) in 517 mL of H₂O was added to a stirred solution of Zn(SO₄)₂·7H₂O (0.34 mol, 99.42 g) in 517 mL of H₂O. The resulting precipitate was stirred at room temperature for4 h, filtered, and washed with H₂O. Yield: ∼100 g, ∼98%. The cubic phase purity of the material was confirmed by identifying the respective PXRD peaks of PBA at the following characteristic 2θ(°)positions: 14.9, 17.3, 24.5, 28.8, 35, 39.2, 43.2 (see Figure 2). The composition of Example 9 was determined by ICP-OES analysis as described above and the results are shown in Table 1. The number of water molecules was calculated from TGA data.

### Example 10: Scale-up synthesis of Example 1 - K_{0.10}Zn[Co(CN)₆]_{0.70}·4H₂O

A solution of K₃[Co(CN)₆] (180 mmol, 59.81 g) in 1.8 L of H₂O was added to a stirred solution of Zn(SO₄)₂·7H₂O (180 mmol, 51.76 g) in 1.8 L of H₂O. The resulting precipitate was stirred at room temperature for 30 minutes, filtered, and washed with H₂O. Yield: 49.15 g, ∼97%. The cubic phase purity of the material was confirmed by identifying the respective PXRD peaks of PBA at the following characteristic 2θ(°)positions: 14.9, 17.3, 24.5, 28.8, 35, 39.2, 43.2 (see Figure 2). The composition of Example 10 was determined by ICP-OES analysis as described above and the results are shown in Table 1. The number of water molecules was calculated from TGA data.

### Example 11 - ROS038X paper composite was made by using a material prepared as described in example 10.

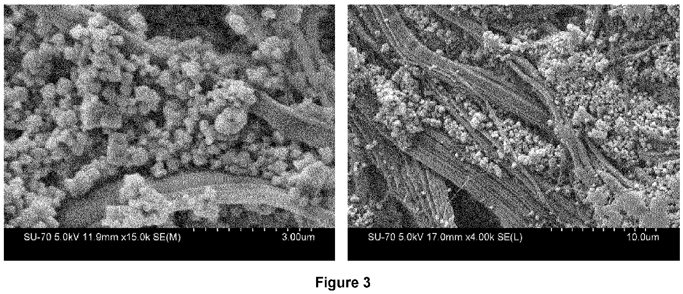

A mixture of multiple cellulose and non-cellulose fibres are combined with the sorbent material of Example 10, proprietary binders (i.e. acrylic based binding system in whole or in part combined with PVOH based binders) and blended into a water slurry. The slurry was funnelled through a common paper making press system comprising various stages of water removal via temperature and pressure applied to the slurry, until a flat paper can be rolled for delivery to the rotor manufacturer. Figure 3 shows scanning electron microscopy images of this paper composite (in 3 µm and 10 µm magnification).

### Comparative Example 1 -ZnCo

An aqueous solution of Zn(SO₄)₂·7H₂O (0.01M, 287 mg in 100 mL H₂O) was dropwise mixed with H₃[Co(CN)₆] (0.01M, 218 mg in 100 mL of H₂O) and the resulting precipitate was stirred for 30 minutes and left on bench for 1 week. The precipitate was separated from the mother liquor by centrifugation and the solid fraction was washed with distilled water and then air-dried. Yield, 230 mg, ∼81%. The phase purity of the material was confirmed by identifying the respective peaks of PBA at 2θ (°) 14.9, 17.3, 24.5, 28.8, 35, 39.2, 43.2 in PXRD. X-ray dispersed-energy spectroscopy (EDX) analyses shows that the atomic metal ratio (Zn:Co) was close to 3:2 which is very good agreement with ZnCo reported in Roque *et al.* 2007 (cited above). Chemical composition was determined by ICP-OES analysis:

**ICP-OES analysis of ZnCo:**

| **Sample** | **Co (ppm)** | **Zn (ppm)** | **K* (ppm)** | **Co Molar** | **Zn Molar** | **K* Molar** | **K/Zn** | **Co/Zn** | **Calculated formula** |
|---|---|---|---|---|---|---|---|---|---|
| ZnCo | 62.06 | 103.62 | 0.3 | 1.053 | 1.584 | 0.007 | 0.004 | 0.664 | Zn[CO(CN)₆]_{0.664}·4H₂O |

| | | | | | | | | | |
|---|---|---|---|---|---|---|---|---|---|
| *Note: The amount of K⁺ detected here is negligible. This K⁺ comes from the starting material H₃[Co(CN)₆] which has 0.5-1% K⁺ impurity as mentioned above. | | | | | | | | | |

**EDX analysis of ZnCo:**

| **Element** | **Atomic%** | **Zn:Co** |
|---|---|---|
| **Zn** | 60.78 | 1.56 |
| **Co** | 38.83 | |
| **K** | 0.40 | |

### Comparative Example 2 - Zn₃₋ₐFeₐ[Co(CN)₆]₂·nH₂O - FeZnCo

A solution of K₃[Co(CN)₆] (1 mmol, 332.33 mg) in 100 mL of H₂O was added to a mixed solution of FeSO₄·7H₂O (1.8 mmol, 501 mg in 100 mL H₂O) and Zn(SO₄)₂·7H₂O (3.6 mmol, 1.036 g in 100 mL H₂O). The resulting precipitate was filtered by using membrane filter paper and washed with distilled H₂O. Yield, 310 mg, ∼77%. The phase purity of the material was confirmed by identifying the respective peaks of PBA at 2θ (°) 14.9, 17.3, 24.5, 28.8, 35, 39.2, 43.2 in PXRD. Chemical composition was determined by ICP-OES analysis:

**ICP-OES analysis of ZnFeCo:**

| **Sample** | **Co (ppm)** | **Zn (ppm)** | **Fe (ppm)** | **Co Molar** | **Zn Molar** | **Fe Molar** | **Fe/Co** | **Zn/Co** | **Calculated formula** |
|---|---|---|---|---|---|---|---|---|---|
| ZnFeCo | 77.23 | 90.29 | 33.53 | 1.310 | 1.380 | 0.600 | 0.458 | 1.053 | Zn_{2.1} Fe_{0.9}[Co(CN)₆]₂·yH₂O |

**Table 1. Chemical compositions of ROS-038X and ROS-038Y from ICP-OES analysis.**

| **Example** | **Co (ppm)** | **Zn (ppm)** | **K (ppm)** | **Co Molar** | **Zn Molar** | **K Molar** | **K/Zn** | **Co/Zn** | **Calculated formula** |
|---|---|---|---|---|---|---|---|---|---|
| 1 | 80.52 | 127.00 | 8.05 | 1.366 | 1.941 | 0.205 | 0.100 | 0.700 | K_{0.10.}Zn[Co(CN)₆]_{0.70}·4H₂O |
| 2 | 85.72 | 142.06 | 0.76 | 1.454 | 2.171 | 0.019 | 0.009 | 0.669 | K_{0.009}Zn[Co(CN)₆]_{0.669}·4.2H₂O |
| 3 | 79.58 | 130.57 | 1.59 | 1.350 | 1.996 | 0.040 | 0.020 | 0.676 | K_{0.02}Zn[Co(CN)₆]_{0.676}·4.2H₂O |
| 4 | 81.00 | 132.50 | 2.89 | 1.374 | 2.025 | 0.074 | 0.030 | 0.678 | K_{0.03}Zn[Co(CN)₆]_{0.677}·4.2H₂O |
| 5 | 76.62 | 123.10 | 5.10 | 1.300 | 1.883 | 0.130 | 0.060 | 0.689 | K_{0.06}Zn[Co(CN)₆]_{0.688}·3.5H₂O |
| 6 | 84.27 | 133.24 | 9.01 | 1.430 | 2.036 | 0.230 | 0.113 | 0.702 | K_{0.11}Zn[Co(CN)₆]_{0.702}·4.2H₂O |
| 7 | 78.00 | 122.00 | 9.15 | 1.323 | 1.865 | 0.234 | 0.125 | 0.709 | K_{0.12}Zn[Co(CN)₆]_{0.709}·3.5H₂O |
| 8 | 72.33 | 113.03 | 9.09 | 1.227 | 1.728 | 0.232 | 0.134 | 0.710 | K_{0.13}Zn[Co(CN)₆]_{0.711}·4H₂O |
| 9 | 90.62 | 132.43 | 19.52 | 1.537 | 2.024 | 0.499 | 0.246 | 0.759 | K_{0.25}Zn[Co(CN)₆]_{0.75}·3.8H₂O |
| **10** - **Scale-up of Example 1** | 78.80 | 124.29 | 7.68 | 1.339 | 1.900 | 0.196 | 0.103 | 0.704 | K_{0.10}Zn[Co(CN)₆]_{0.70}·4H₂O |

### Performance testing

### Thermal stability test

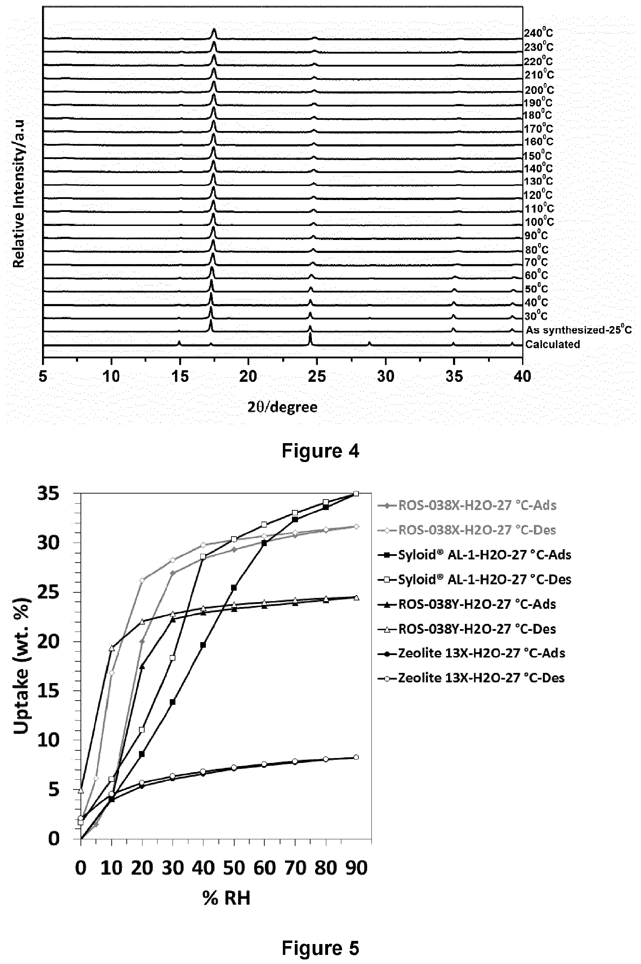

The thermal stability of the cubic phase of the Example 1 material (termed ROS-038X) was confirmed by variable temperature Powder X-ray Diffraction (VT-PXRD) in the range of 25 °C-240 °C. Figure 4 shows the VT-PXRD patterns of Example 1 from 25 °C to 240 °C (measured under N₂ flow), obtained as described above. The results confirm that the cubic phase of Example 1 is stable even at 240 °C in air and under vacuum. The unit cell was observed to have slightly shrunk after losing water molecules at around 80 °C.

### Water vapour sorption studies - water uptake

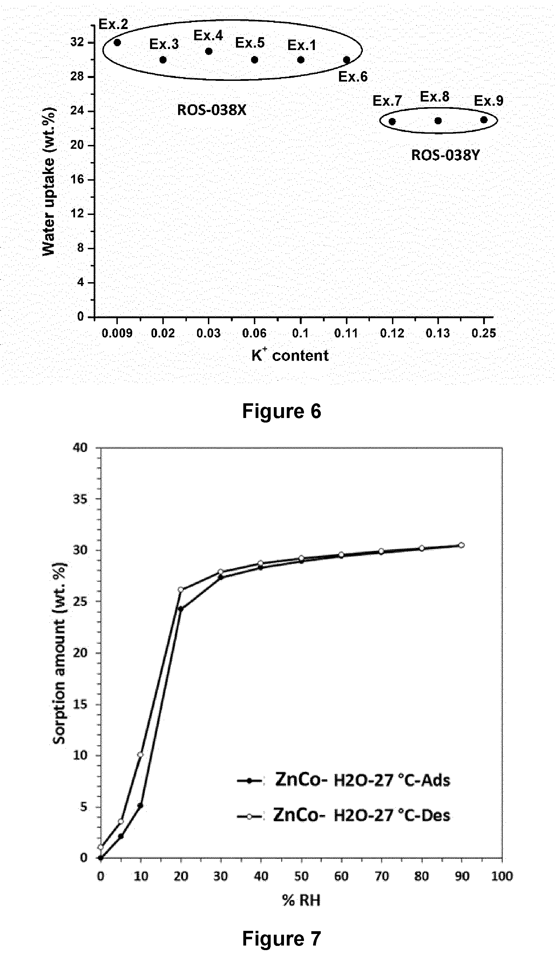

Water sorption isotherms were collected at 27 °C in the humidity range of 0-90% RH using an SMS Intrinsic DVS instrument as described above. Figure 5 shows the water sorption isotherms of Example 1 (ROS-038X), Example 9 (ROS-038Y), Syloid^{®} AL-1 and Zeolite 13X measured at 27 °C. The filled and open symbols represent the adsorption and desorption branch, respectively. Instrument: Intrinsic-DVS. dm/dt (%/min) < 0.05. Figure 6 shows water uptake in wt. % (at 60% RH and 27 °C) Vs. K⁺ content of the example material for Examples 1-9. Examples 1-6 (termed ROS-038X material) were observed to exhibit higher water uptake than Examples 7-9 (termed ROS-038Y material) (see Figure 5) and a correlation between K⁺ content and water uptake was evident (Figure 6). Specifically, for K⁺ content in the range of 0.009-0.12 of Examples 1-6 water uptake was -30 wt. %. A drop in water uptake at K⁺ = 0.12 and above in Examples 7-9 was observed, indicating that the ROS-038X and ROS-038Y materials have distinct structures (or phases).

As revealed by the results of Figure 5, the ROS-038X material Example 1 adsorbs ca. 30 wt. % at 60% RH and ca. 27 wt. % at 30% RH. To assess the performance of ROS-038X as a desiccant against commercially used materials, Zeolite 13X and Syloid^{®} AL-1 were tested under the same conditions. Syloid^{®} AL-1 showed water uptake of ca. 30 wt. % at 60% RH and ca. 14 wt. % at 30% RH, an isotherm profile that is poorly suited for the intended purpose of efficient water vapour sorption. In particular, the water uptake of Example 1 (ROS-038X) is twice that of Syloid^{®} AL-1 at 30% RH. The other commercial desiccant, Zeolite 13X shows a water uptake of ca. 5 wt. % at 30% RH and of ca. 7 wt. % at 60% RH, much lower than the values measured for Example 1 (ROS-038X).

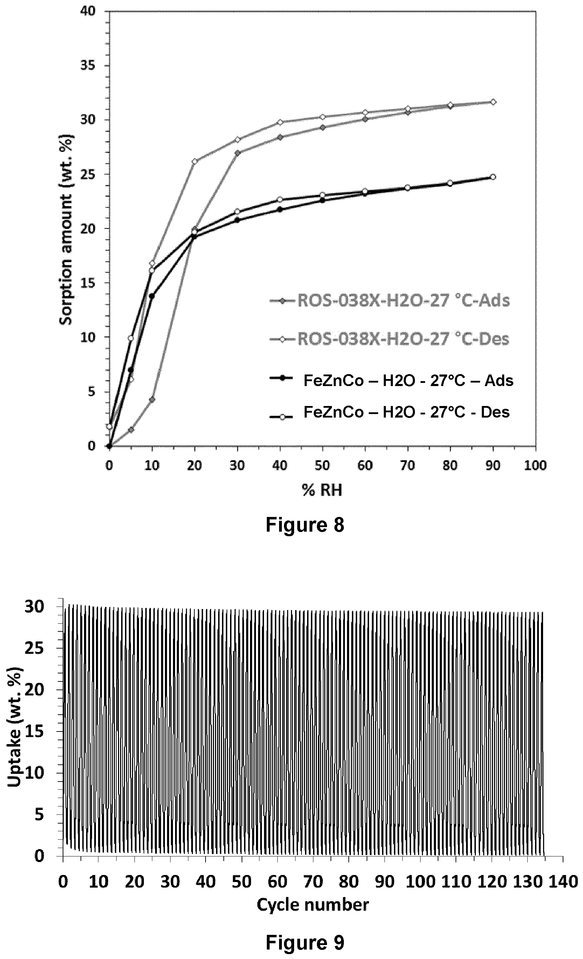

For comparison, the ZnCo and FeZnCo materials were similarly tested for their water sorption performance. The results are shown in Figures 7 and 8. The ZnCo material showed a similar performance to ROS-038X, but of course is unstable to heat and so would not be effective in most practical applications. The FeZnCo material showed significantly lower water sorption than ROS-038X.

### Water vapour sorption studies - recyclability

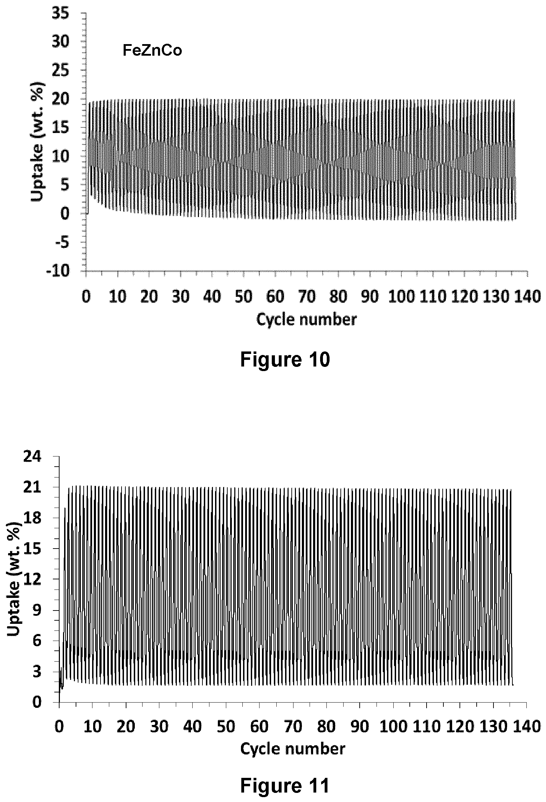

Sorbent recyclability tests that simulate a vacuum swing process (test conditions: adsorption 0→60% P/Po, 5 min; desorption 60→0% P/Po, 5 min) were performed at 27 °C using an SMS Vacuum DVS on the material of Example 1, using the procedure described above. Figure 9 shows the results of these water cycling experiments of Example 1 (ROS-038X) for 135 cycles. Adsorption conditions were from 0% P/Po to 60% P/Po at 27 °C over 5 min. Desorption conditions were from 60% P/Po to 0% P/Po at 27 °C over 5 min. Before starting the cycling tests, the sample was in-situ preactivated at 0% P/Po and 50 °C for 3 hours and at 27 °C for 1 h in the Vacuum-DVS instrument. Mass at the end of first 0% P/Po stage: 5.3 mg. In a 10 min cycle of adsorption/desorption, Example 1 (ROS-038X) exhibited a working capacity of 30 wt.% while maintaining performance for >135 cycles (see Figure 9). Under the same conditions, Syloid^{®} AL-1 showed a working capacity of 23 wt. %. Example 1 (ROS-038X) therefore has higher working capacity than Syloid^{®} AL-1. The comparative example FeZnCo sorbent material was similarly tested and the results are shown in Figure 10.

The paper composite Example 11 was manufactured as described above using the material of Example 10 (ROS-038X) and tested using the SMS Vacuum DVS under the same conditions as those used for the Example 1 (ROS-038X) powder described above. Figure 11 shows these water cycling experiments of Example 11 (ROS-038X) paper composite for 135 cycles. Adsorption conditions were from 0% P/Po to 60% P/Po at 27 °C over 5 min. Desorption conditions were from 60% P/Po to 0% P/Po at 27 °C over 5 min. Before starting the cycling tests, the paper was in-situ preactivated at 0% P/Po and 50 °C for 3 hours and at 27 °C for 1 h in the Vacuum-DVS instrument. Mass at the end of first 0% P/Po stage: 6.6 mg. As shown in Figure 11, the working capacity of ROS-038X paper Example 11 is ca. 21 wt.% and its performance is retained for >135 cycles.

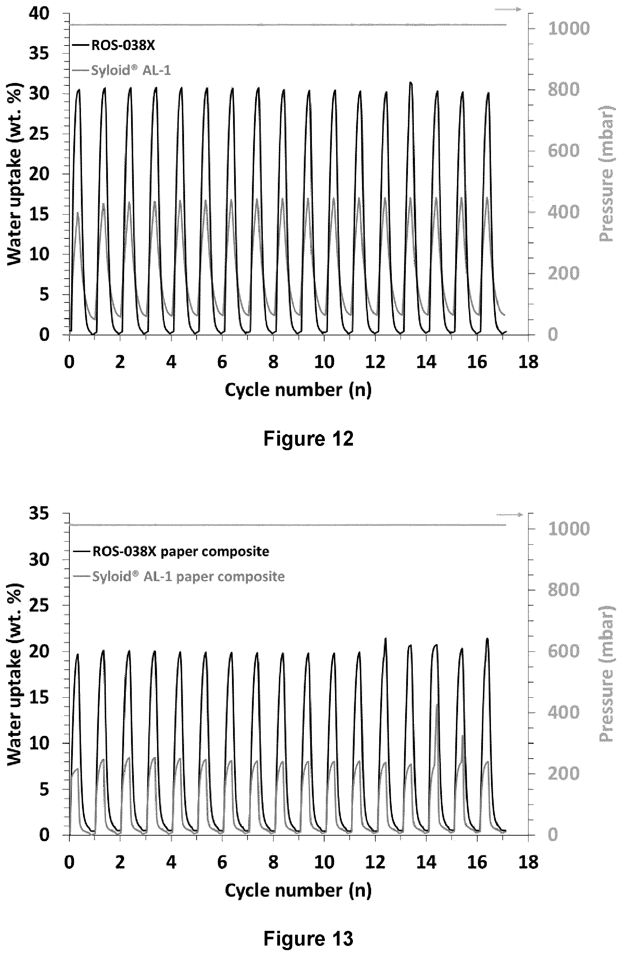

Sorbent recyclability tests that simulate a temperature and humidity swing that mimics a real world recycling process were performed using an IGA vapour sorption analyser on the material of Example 1 (ROS-038X) as well as on Syloid^{®} AL-1, using the procedure described above. Figure 12 shows the comparative results of these water cycling experiments of Example 1 (ROS-038X) vs. Syloid^{®} AL-1 for 17 cycles. Adsorption conditions were from 0% RH to 60% RH at 27 °C over 14 min. Desorption conditions were from 60% RH to 0% RH at 49 °C over 20 min (Figure 12). Before starting the cycling tests, the sample was in-situ preactivated at 0% RH and 50 °C under dry air for 1 hours and at 27 °C for 1 h in the IGA instrument. Mass at the end of first 0% RH stage: 6.5 mg. In a 34 min cycle of adsorption/desorption, Example 1 (ROS-038X) exhibits a working capacity of 30.2 wt.% (at 49 °C) while maintaining the performance for >17 cycles (see Figure 12, Table 2). Under the same conditions, Syloid^{®} AL-1 showed a working capacity of 14.6 wt.% (see Figure 12, Table 2). The deliverability of water (L/(kg·day)) over time for each to these materials are shown in the Table 2. Example 1 (ROS-038X) therefore has superior working capacity and deliverability of water (12.79 L/(kg·day)) compared to Syloid^{®} AL-1 (6.17 L/(kg·day)).

**Table 2: Comparison of working capacities and deliverability of water for ROS-038X and Syloid^{®} AL-1 under temperature and humidity swing test.**

| Sorbent (Test condition: 0% →60% RH @27 °C for 14 min. 60% → 0% RH @49 °C for 20 min) | Adsorption (min) | Desorption (min) | Working capacity (wt. %) (After 17 cycles) | Deliverability (L/(kg·day) (After 17 cycles) |
|---|---|---|---|---|
| ROS-038X | 14 | 20 | 30.2 | 12.79 |
| Syloid^{®} AL-1 | 14 | 20 | 14.6 | 6.17 |
| ROS-038X paper composite | 14 | 20 | 21.3 | 9.04 |
| Syloid^{®} AL-1 paper composite | 14 | 20 | 7.6 | 3.20 |

Temperature and humidity swing recycling tests were performed on the paper composite Example 11 (manufactured using the material of Example 10 (ROS-038X)) using the IGA vapour sorption analyser under the same conditions as those used for the Example 1 (ROS-038X) powder described above. Figure 13 shows these water cycling experiments of Example 11 (ROS-038X) paper composite for 17 cycles. Adsorption conditions were from 0% RH to 60% RH at 27 °C over 14 min. Desorption conditions were from 60% RH to 0% RH at 49 °C over 20 min. Before starting the cycling tests, the paper composites was in-situ preactivated at 0% RH and 50 °C under dry air for 3 hours and at 27 °C for 1 h in the IGA instrument. Mass at the end of first 0% RH stage: 7.8 mg. As shown in Figure 13 and Table 2, the working capacity (wt. %) of ROS-038X paper composite Example 11 is ca. 21.3 wt. % and its performance is retained for >17 cycles. The deliverability of water is 9.04 L/(kg·day).

The ROS-038X material therefore exhibits superior water harvesting and dehumidification performance compared to leading commercial desiccants. Moreover, these results demonstrate that the ROS-038X material can be prepared at scale by a green synthesis method (slurrying in water), an important requirement for large scale production and end use of desiccants.

In summary, the present invention provides crystalline sorbent materials which have favourable water uptake capacity and sorption/desorption kinetics for use as water capture materials whilst having structural stability and recyclability in water capture over many cycles. Furthermore the crystalline sorbent materials described herein can be obtained on a large scale from a process having a low environmental impact. Therefore the crystalline sorbent materials of the present invention may provide sorbent materials for water capture processes which are advantageous over known sorbent materials.

Although a few preferred embodiments have been shown and described, it will be appreciated by those skilled in the art that various changes and modifications might be made without departing from the scope of the invention, as defined in the appended claims.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention. Typically, when referring to compositions, a composition consisting essentially of a set of components will comprise less than 5% by weight, typically less than 3% by weight, more typically less than 1% by weight of non-specified components.

The term "consisting of" or "consists of" means including the components specified but excluding addition of other components.

Whenever appropriate, depending upon the context, the use of the term "comprises" or "comprising" may also be taken to encompass or include the meaning "consists essentially of" or "consisting essentially of", and may also be taken to include the meaning "consists of" or 10 "consisting of".

For the avoidance of doubt, wherein amounts of components in a composition are described in wt. %, this means the weight percentage of the specified component in relation to the whole composition referred to. For example, "wherein the sorbent composition comprises from 10 to 90 wt. % of the crystalline sorbent material" means that from 10 to 90 wt. % of the sorbent composition is 15 provided by the crystalline sorbent material.

The optional features set out herein may be used either individually or in combination with each other where appropriate and particularly in the combinations as set out in the accompanying claims. The optional features for each aspect or exemplary embodiment of the invention as set out herein are also to be read as applicable to any other aspect or exemplary embodiments of the invention, where appropriate. In other words, the skilled person reading this specification should consider the optional features for each exemplary embodiment of the invention as interchangeable and combinable between different exemplary embodiments.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, and drawings), and/or all of the steps of any method or process so disclosed, may be combined in any combination, except combinations where at least some of such features and/or steps are 30 mutually exclusive.

Each feature disclosed in this specification (including any accompanying claims, and drawings) may be replaced by alternative features serving the same, equivalent or similar purpose, unless expressly stated otherwise. Therefore unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, and drawings), or to any novel one, or any novel combination, of the steps of any method or process so disclosed.

## Claims

1. A crystalline sorbent material of formula:
A_{b}M'[M(CN)₆]_{y}·nH₂O
wherein A is a group 1 metal; b is from 0.001 to 0.3; M' is a transition metal; M is iron or cobalt; y is from 0.65 to 0.80; and n is from 0 to 7.

2. The crystalline sorbent material according to any preceding claim wherein A is potassium.

3. The crystalline sorbent material according to any preceding claim wherein M' is zinc.

4. The crystalline sorbent material according to any preceding claim wherein M is cobalt.

5. The crystalline sorbent material according to any preceding claim having a formula (K_{b}Zn[Co(CN)₆]_{y}·nH₂O) wherein b is from 0.001 to 0.3, y is from 0.65 to 0.80 and n is from 0 to 7.

6. The crystalline sorbent material according to claim 5 wherein b is from 0.005 to 0.12.

7. The crystalline sorbent material according to claim 5 wherein b is from 0.12 to 0.3.

8. The crystalline sorbent material according to any preceding claim having a cubic unit cell.

9. The crystalline sorbent material according to any preceding claim which is thermally stable and/or hydrolytically stable, suitably wherein the crystalline sorbent material does not undergo a phase transition to a hexagonal phase when heated to at least 80 °C.

10. A method of preparing a crystalline sorbent material according to any preceding claim, the method comprising the steps:
(a) reacting a source of B_{c}[M(CN)₆] with a source of M'Xₓ; and
(b) obtaining the crystalline sorbent material;
wherein B is H or a group 1 metal; c is from 2 to 4; M' is a transition metal; M is iron or cobalt; X is an anion; and x is from 1 to 4.

11. The method according to claim 10, wherein step (a) involves the source of B_{c}[M(CN)₆] with a source of M'Xₓ in water; and step (b) involves precipitating the crystalline sorbent material from water.

12. A method of capturing water from a composition comprising water and/or water vapour, the method comprising:
(i) providing a crystalline sorbent material of formula A_{b}M'[M(CN)₆]_{y}·nH₂O; and
(ii) contacting the crystalline sorbent material with the composition comprising water;
wherein upon contact with the composition comprising water and/or water vapour the crystalline sorbent material sorbs water; and wherein A is a group 1 metal; b is from 0.001 to 0.3, M' is a transition metal, M is iron or cobalt; y is from 0.65 to 0.80; and n is from 0 to 7.

13. The method according to claim 12 wherein the composition is a gaseous composition comprising water, suitably wherein the gaseous composition is air.

14. The method according to claim 12 or claim 13 comprising a further step (iii) of releasing the captured water from the crystalline sorbent material using a suitable process such as temperature swing, humidity swing or vacuum swing.

15. The method according to any of claims 12 to 14 wherein the crystalline sorbent material is provided on a support.

16. A method of delivering water to a locus from a composition comprising water or water vapour, the method comprising the steps of:
(1) providing a crystalline sorbent material of formula A_{b}M'[M(CN)₆]_{y}·nH₂O;
(2) contacting the crystalline sorbent material with water or water vapour to capture water into the crystalline sorbent material;
(3) optionally transporting and/or storing the crystalline sorbent material;
(4) applying a stimulus to the crystalline sorbent material to effect desorption of water retained therein; and
(5) collecting desorbed water at the locus;
wherein A is a group 1 metal; b is from 0.001 to 0.3; M' is a transition metal; M is iron or cobalt; y is from 0.65 to 0.80; and n is from 0 to 7.

17. Use of a crystalline sorbent material of formula A_{b}M'[M(CN)₆]_{y}·nH₂O to capture water or water vapour from a composition comprising water; wherein A is a group 1 metal; b is from 0.001 to 0.3; M' is a transition metal; M is iron or cobalt; y is from 0.65 to 0.80; and n is from 0 to 7.
